# EUROPEAN PATENT APPLICATION

(11) **EP 4 201 825 A1**
(43) Date of publication of application: **28.06.2023**
(21) Application number: 21798262.8
(22) Date of filing: 02.04.2021
(51) Int. Cl.: B65B 11/58, B65B 61/00

(54) **FILM LAMINATING MACHINE AND USAGE METHOD THEREFOR**

(30) Priority: 18.08.2020 CN 202010833799
(71) Applicant: Shanghai Sage Intelligent Technology Co., Ltd., Minhang District Shanghai 200240 (CN)
(72) Inventor: ZHANG, Jianzheng, Shanghai 200240 (CN); DONG, Yi, Shanghai 200240 (CN); FAN, Kaijie, Shanghai 200240 (CN); JIN, Youlei, Shanghai 200240 (CN); GAO, Guang, Shanghai 200240 (CN)
(74) Representative: Lang, Christian
(86) International application number: PCT/CN2021/085288
(87) International publication number: WO 2022/037077

(57) **Abstract**

Embodiments of the present disclosure provide a film laminating machine (100) and a method for using the same, belonging to the technical field of electronic control. The film laminating machine (100) comprises: a lifting device (110) including a first frame body (112), and a first motor (111) arranged on the first frame body (112); a bearing assembly (120) including a roller table (121) arranged at a middle position below the first frame body (112), a palletized article being arranged on the roller table (121); a film transporting device (130) including a second motor (132), and at least two roller sets (131), all roller sets (131) are arranged at different heights, being respectively in transmission connection with a drive shaft of the second motor (132), and different roller sets (131) are installed with different specifications of cold shrinkable films ; a film stretching device (140) including a plurality of film continuation assemblies (141) respectively arranged below the roller sets (131); a detector arranged on the first frame body (112); and a controller electrically connected with the first motor (111), the second motor (132) and a control terminal of the detector. Through the disclosed processing scheme, according to the specifications of the palletized article detected by the detector, different specifications of the cold-shrinkable films are selected, which are stretched by the film continuation assemblies (141) and cover the palletized article, so that the processing efficiency and adaptability of the film laminating machine (100) are improved.

## Description

### TECHNICAL FIELD

The present disclosure relates to the technical field of electronic control, and in particular to a film laminating machine and a method for using the same.

### BACKGROUND

At present, with the acceleration of modern industrialization process, an automatic film laminating machine can realize a function of fast film coating when goods are packaged on a production line, and the efficiency of the film laminating machine far outweighs the efficiency of manual packaging. Consequently, the film laminating machine has been used more and more widely in the packaging field. However, as film laminating machines currently available on the market basically can only meet one size of palletized article, only one size of palletized article can be packaged on the same production line. As a result, the compatibility of automatic equipment is seriously reduced, and it is likely to have a problem of sealing failure or instability caused by a complex structure during stretching and sealing.

Thus, it can be seen that there is an urgent need for a film laminating machine which can select different cold-shrinkable films for palletized articles of different specifications and stably stretch them.

### SUMMARY

In view of this, embodiments of the present disclosure provide a film laminating machine and a method for using the same, which at least partially solve the problem existing in the prior art.

In a first aspect, the embodiments of the present disclosure provide a film laminating machine, including:
a lifting device, including a first frame body, and a first motor arranged on the first frame body;
a bearing assembly, including a roller table, and the roller table is arranged at a middle position below the first frame body, a palletized article being arranged on the roller table;
a film transporting device, including at least two roller sets and a second motor which are arranged on the first frame body, all the roller sets are arranged at different heights, being respectively in transmission connection with a drive shaft of the second motor, and different roller sets are installed with different specifications of cold shrinkable films;
a film stretching device, including a plurality of film continuation assemblies respectively arranged below the roller sets, each film continuation assembly being configured to clamp and stretch the cold-shrinkable film in a preset direction, and the stretching directions of the different film continuation assemblies being different;
a detector, arranged on the first frame body and configured to detect a specification of the palletized article on the roller table;
a controller, electrically connected to the first motor, the second motor and a control terminal of the detector; the controller being configured to select a target roller set such that the target roller set is matched with the specification of the palletized article detected by the detector, to control the second motor to drive the target roller set to rotate such that the cold shrinkable film on the target roller set is transported to the film continuation assemblies, then to control the film continuation assemblies such that the cold shrinkable film transported from the target roller set is stretched to a size matched with the palletized article, and to drive all the film continuation assemblies to clamp the cold shrinkable film through the first motor such that the cold shrinkable film covers the palletized article.

According to a specific implementation of the embodiments of the present disclosure, the bearing assembly further includes two push rods and a variable frequency motor; the two push rods are oppositely arranged on both sides of the roller table; and a drive shaft of the variable frequency motor is in transmission connection with the two push rods, and the variable frequency motor is configured to drive the two push rods to move relatively close to or away from each other, such that the two push rods push the palletized article transported onto the roller table to a middle position thereof.

According to another specific implementation of the embodiments of the present disclosure, the film transporting device further includes a funnel and a suction assembly; the funnel is arranged between the roller sets and the film continuation assemblies, and an opening of the funnel faces the roller sets; and the suction assembly is arranged at a film outlet of the funnel.

According to another specific implementation of the embodiments of the present disclosure, the suction assembly includes a third motor, a first suction cup set and a second suction cup set; the third motor is electrically connected to the controller; the first suction cup set and the second suction cup set are oppositely arranged and are in transmission connection with the third motor; and the third motor is configured to drive the first suction cup set and the second suction cup set to move close to or away from the cold-shrinkable film therebetween, so that the first suction cup set and the second suction cup set suck two opposite film layers of the cold-shrinkable film respectively such that the two opposite film layers are separated.

According to another specific implementation of the embodiments of the present disclosure, the film transporting device further includes a static electricity elimination assembly, arranged between the film outlet of the funnel and the suction assembly.

According to another specific implementation of the embodiments of the present disclosure, the film transporting device further includes a heat-sealing assembly, the heat-sealing assembly including a serrated knife, a knife groove, a first heat-sealing rod, a second heat-sealing rod and an air cylinder; the serrated knife and the air cylinder are both fixedly arranged between the static electricity elimination assembly and the suction assembly; the first heat-sealing rod and the second heat-sealing rod are oppositely arranged below the serrated knife; the serrated knife is in transmission connection with a drive shaft of the air cylinder; and, after the first heat-sealing rod and the second heat-sealing rod cooperatively perform heat seal on the cold-shrinkable film, the air cylinder is applied to drive the serrated knife to move close to or away from the knife groove, such that the serrated knife cooperates with the knife groove to cut the cold-shrinkable film.

According to another specific implementation of the embodiments of the present disclosure, the film stretching device further includes a plurality of sliders and a second frame body; each of the sliders is connected to one film continuation assembly; a roller is arranged on a surface of each slider that is in contact with the second frame body, and is clamped onto the second frame body, such that the sliders horizontally move along a sliding chute on the second frame body by means of the roller.

According to another specific implementation of the embodiments of the present disclosure, the roller is a V-shaped wheel; a bearing pulley is arranged on each of two sides of the V-shaped wheel, and is arranged on a surface of each slider that is in contact with the second frame body; and the sliders move along the second frame body by means of the bearing pulleys.

According to another specific implementation of the embodiments of the present disclosure, the film continuation assembly includes pulling claws and a fourth motor; the pulling claws are fixedly arranged on the slider; a drive shaft of the fourth motor is in transmission connection with the slider; and the fourth motor is configured to drive the slider to move along a third frame body after that the pulling claws clamp the cold-shrinkable film.

In a second aspect, the embodiments of the present disclosure provide a method for using a film laminating machine. The method is applied to the film laminating machine according to any one of above embodiments, and includes:
providing the film laminating machine and a palletized article, the film laminating machine including a lifting device, a bearing assembly, a film transporting device, a film stretching device, a detector, and a controller;
detecting, by the detector, a specification of the palletized article on the bearing assembly;
selecting, by the controller, a matching target roller set from the film transporting device based on the specification of the palletized article, and transporting a cold-shrinkable film on the target roller set to the film stretching device;
stretching, by film continuation assemblies of the film stretching device, the cold-shrinkable film to have a specification corresponding to the palletized article; and
driving, by a first motor of the lifting device, a third frame body of the film stretching device to move close to the palletized article, so as to cover the palletized article with the cold-shrinkable film.

The film laminating machine provided by the embodiments of the present disclosure includes: the lifting device including a first frame body, and the first motor arranged on the first frame body; the bearing assembly including a roller table arranged at a middle position below the first frame body, a palletized article being arranged on the roller table; the film transporting device including at least two roller sets and a second motor, all the roller sets are arranged at the different heights, being respectively in transmission connection with a drive shaft of the second motor, and being mounted with the cold-shrinkable films of different specifications; the film stretching device including a plurality of film continuation assemblies respectively arranged below the roller sets, each film continuation assembly being configured to clamp and stretch the cold-shrinkable film in a preset direction, and the stretching directions of the different film continuation assemblies being different; the detector arranged on the first frame body and configured to detect a specification of the palletized article on the roller table; and the controller electrically connected to the first motor, the second motor and a control terminal of the detector, the controller being configured to select a matching target roller set based on the specification of the palletized article detected by the detector, control the second motor to drive the target roller set to rotate to enable the cold-shrinkable film on the target roller set to be transported to the film continuation assemblies, control the film continuation assemblies to stretch the cold-shrinkable film transported from the target roller set to have a size matched with the palletized article, and drive all the film continuation assemblies by means of the first motor to clamp the cold-shrinkable film to cover the palletized article. According to the solutions provided by the present disclosure, the cold-shrinkable film of the corresponding specification is selected based on the specification of the palletized article detected by the detector, and is stretched by the film continuation assemblies to cover the palletized article, so that the processing efficiency and adaptability of the film laminating machine are improved.

### BRIEF DESCRIPTION OF THE DRAWINGS

For clearer descriptions of the technical solutions in the embodiments of the present disclosure, the following briefly introduces the accompanying drawings required for describing the embodiments. Apparently, the accompanying drawings in the following description show merely some embodiments of the present disclosure, and persons of ordinary skill in the art may still derive other drawings from these accompanying drawings without creative efforts.
FIG. 1 is a schematic structural diagram of a film laminating machine provided by an embodiment of the disclosure;
FIG. 2 is a schematic diagram of a partial structure of the film laminating machine provided by an embodiment of the disclosure;
FIG. 3 is a schematic diagram of a partial structure of another film laminating machine provided by an embodiment of the disclosure;
FIG. 4 is a schematic diagram of a partial structure of another film laminating machine provided by an embodiment of the disclosure;
FIG. 5 is a schematic diagram of a partial structure of another film laminating machine provided by an embodiment of the disclosure;
FIG. 6 is a schematic diagram of a partial structure of another film laminating machine provided by an embodiment of the disclosure;
FIG. 7 is a schematic diagram of a partial structure of another film laminating machine provided by an embodiment of the disclosure; and
FIG. 8 is a schematic flowchart of a method for using a film laminating machine provided by an embodiment of the present disclosure.

Main reference numerals are summarized as follows:
film laminating machine 100; lifting device 110; first motor 111; first frame body 112; bearing assembly 120; roller table 121; push rod 122; variable frequency motor 123; film transporting device 130; roller set 131; second motor 132; funnel 133; suction assembly 134; static electricity elimination assembly 135; heat-sealing assembly 136; film stretching device 140; film continuation assembly 141; and slider 142.

### DETAILED DESCRIPTION

The embodiments of the present disclosure will be described in detail below with reference to the accompanying drawings.

The implementations of the present disclosure are illustrated below through specific examples, and other advantages and effects of the present disclosure can be easily understood by those skilled in the art through the contents disclosed in the description of the present disclosure. Apparently, the described embodiments are only a part but not all of the embodiments of the present disclosure. The present disclosure can also be implemented or applied by further different specific implementations. Moreover, various modifications or changes may be made to all details in this description based on different viewpoints and applications without departing from the spirit of the present disclosure. It should be noted that the following embodiments and features therein may be combined with each other without conflict. All other embodiments obtained by a person of ordinary skill in the art based on the embodiments of the present disclosure without creative efforts shall fall within the protection scope of the present disclosure.

It should be noted that various aspects of the embodiments within the scope of the appended claims are described hereinafter. Obviously, the aspects described herein may be embodied in a wide variety of forms, and any specific structure and/or function described herein are/is merely illustrative. Based on the present disclosure, those skilled in the art should understand that one aspect described herein can be implemented independently of any other aspects, and two or more of these aspects can be combined in various ways. For example, any number of aspects set forth herein may be configured to implement an apparatus and/or practice a method. In addition, such an apparatus may be implemented and/or such a method may be practiced using other structure and/or functionality in addition to or other than one or more of the aspects set forth herein.

It should be noted that the diagrams provided in the following embodiments merely schematically illustrate the basic concept of the present disclosure, and only the components related to the present disclosure are shown in the diagrams, so that the diagrams are not drawn in accordance with the number, shape and size of the components in actual implementations. The type, the number and the proportion of the components in the actual implementations can be arbitrarily changed, and layouts of the components may be more complicated.

In addition, in the following description, specific details are provided to facilitate thorough understanding of the examples. However, it will be understood by those skilled in the art that the described aspects may be practiced without these specific details.

Considering a packaging process of goods on a production line, an automatic film laminating machine can realize a function of fast film enveloping, and the efficiency of the film laminating machine far outweighs the efficiency of manual packaging. Consequently, the film laminating machine has been widely used in the packaging field. However, as film laminating machines available on the current market basically can only allow one-size palletization, therefore only one size of palletized article can be packaged on the same production line. As a result, the compatibility of automatic equipment is seriously impaired. The embodiments of the present disclosure provide a film laminating machine which can be applied to a process of film laminating and packaging for palletized articles in scenes such as a factory assembly line.

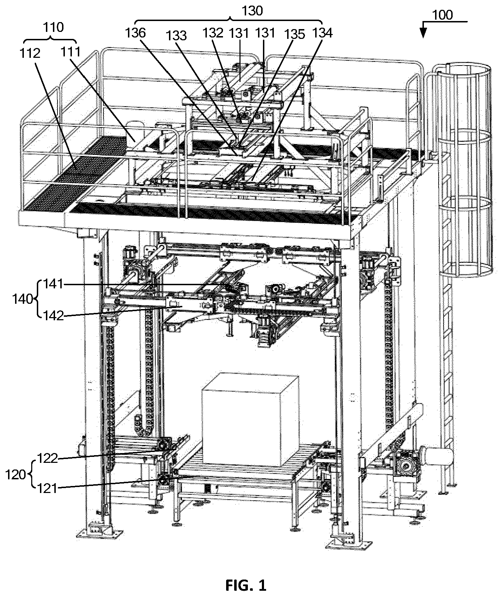

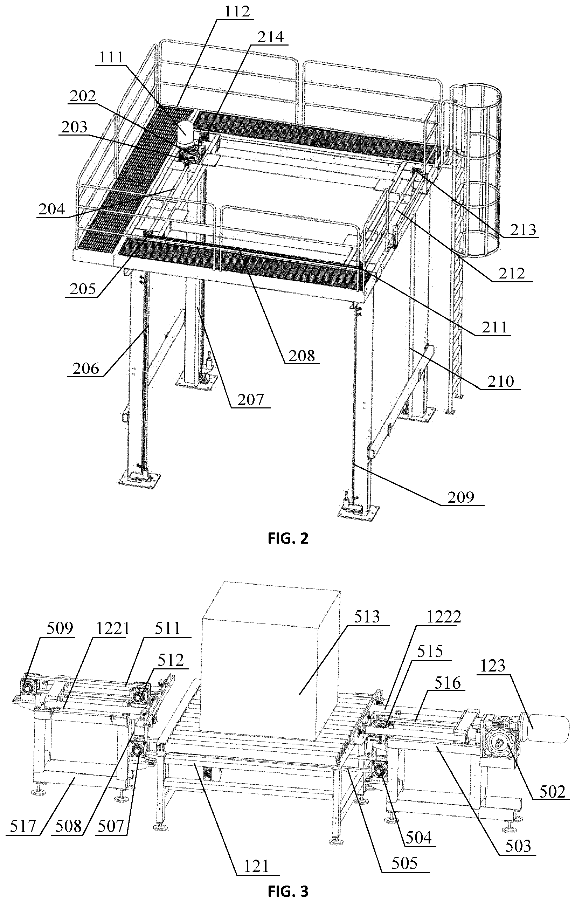

Refer to FIG. 1, a film laminating machine provided by an embodiment of the present disclosure is provided. As shown in FIGs. 1 and 2, the film laminating machine 100 mainly includes:
a lifting device 110, including a first motor 111 and a first frame body 112, wherein the first motor 111 is arranged on the first frame body 112;
a bearing assembly 120, including a roller table 121, wherein the roller table 121 is arranged at a middle position below the first frame body 112, and a palletized article is arranged on the roller table 121;
a film transporting device 130, including a second motor 132 and at least two roller sets 131, wherein the second motor 132 and the roller sets 131 are both arranged on the first frame body 112, and all the roller sets 131 are of different heights and are in transmission connection with a drive shaft of the second motor 132 respectively, and different roller sets 131 mounted with cold-shrinkable films of different specifications;
a film stretching device 140, the film stretching device 140 includes a plurality of film continuation assemblies 141, wherein a plurality of film continuation assemblies 141 are respectively arranged below the roller sets 131, and the film continuation assembly 141 is configured to clamp and stretch the cold-shrinkable film in a preset direction, the stretching directions of the different film continuation assemblies 141 being different;
a detector (not shown in the figures), arranged on the first frame body 112, and configured to detect the specification of the palletized article on the roller table 121;
a controller (not shown in the figures), electrically connected to the first motor 111, the second motor 132 and a control terminal of the detector, wherein the controller is configured to select a target roller set 131 based on the specification of the palletized article detected by the detector, to control the second motor 132 to drive the target roller set 131 to rotate such that the cold-shrinkable film on the target roller set 131 is transported to the film continuation assemblies 141, to control the film continuation assemblies 141 to stretch the cold-shrinkable film transported from the target roller set 131 such that the cold shrinkable film is matched with the size of the palletized article, and to drive all the film continuation assemblies 141 by means of the first motor 111 to clamp the cold-shrinkable film such that the cold shrinkable film covers the palletized article.

During the specific assembling, considering for palletized articles of different specifications, if a cold-shrinkable film of a single specification is selected, there may be a problem of film laminating failure caused by mismatching, if only one cold shrinkable film of a single specification is selected, thus, a plurality of roller sets 131 may be provided, and different roller sets 131 may be mounted with cold-shrinkable films of different specifications. Meanwhile, all the roller sets 131 may be directly mounted at different heights in order to prevent the roller sets 131 from winding or static electricity due to rub friction when transporting the cold-shrinkable films. Then, the first motor 111, the roller sets 131, the second motor 132 and the detector may be arranged on the first frame body 112, the roller table 121 may be arranged at a middle position below the first frame body 112, and a drive shaft of the second motor 132 is in transmission connection with the roller sets 131, then the controller is electrically connected to the first motor 111, the second motor 132 and the control terminal of the detector.

When in use, the roller table 121 may be configured to transport the palletized article, wherein the detector detects the specification of the palletized article on the roller table 121 and sends the detected specification information of the palletized article to the controller when the palletized article on the roller table 121 is transported to a detection region of the detector. Specifications of palletized articles may be preset to correspond to different cold-shrinkable films within a preset range, wherein the controller is configured to select the matching target roller set 131 based on the specification of the palletized article, to control the second motor 132 to drive the target roller set 131 to rotate, such that the cold-shrinkable film on the target roller set 131 is transported to the film continuation assemblies 141, then to control the film continuation assemblies 141 to stretch the cold-shrinkable film transported from the target roller set 131 such that the cold shrinkable film have a size matched with the palletized article, and to drive all the film continuation assemblies 141 by means of the first motor 111 to clamp the cold-shrinkable film such that the cold shrinkable covers the palletized article.

In a specific implementation, the lifting device 110 may also consist of the first motor 111, a reducer 202, a coupling 203, a transmission shaft A204, a lifting sprocket A205, a guide post A206, a guide post D207, a transmission chain 208, a guide post B209, a guide post C210, a lifting sprocket B211, a transmission shaft B212, a lifting sprocket C213, a lifting sprocket D214 and the first frame body 112, wherein the first motor 111 is in matched connection with the reducer 202, the reducer 202 is fixed on the first frame body 112, one end of the transmission shaft A204 is connected to the reducer 202 through the coupling 203, the other end of the transmission shaft A204 is in matched connection with the lifting sprocket A205, the transmission shaft B212 is mounted on the first frame body 112, and two ends of the transmission shaft B212 are respectively in matched connection with the lifting sprocket B211, and the lifting sprocket A205 and the lifting sprocket B211 through the transmission chain 208.

In the film laminating machine provided by the present embodiments, the cold-shrinkable film of the corresponding specification is selected based on the specification of the palletized article detected by the detector, and is stretched by the film continuation assemblies to cover the palletized article, so that the processing efficiency and adaptability of the film laminating machine are improved.

Based on the above embodiment, as shown in FIG. 3, the bearing assembly 120 further includes two push rods 122 and a variable frequency motor 123, wherein the two push rods 122 are oppositely arranged on both sides of the roller table 121, a drive shaft of the variable frequency motor 123 is in transmission connection with the two push rods 122, and the variable frequency motor 123 is configured to drive the two push rods 122 to move relatively close to or away from each other, so that the two push rods 122 can push the palletized article transported onto the roller table 121 to a middle position of the roller table 121.

During specific implementation, considering that the palletized article may have a displacement deviation during transportation, the palletized article may not be in the middle position of the roller table 121 during film lamination, resulting in incomplete film lamination or failure of the film lamination, thus, the two push rods 122 and the variable frequency motor 123 may be oppositely arranged on both sides of the roller table 121, and, when the palletized article reaches a corresponding film laminating region on the roller table 121, the variable frequency motor 123 drives the two push rods 122 to move relatively close to each other simultaneously, so as to correct the position of the palletized article on the roller table 121, to obtain a center position of the palletized article , thereby avoiding a process of manually correcting the palletized article position, and improving the degree of automation.

In a specific implementation, it should be noted that a plurality of push rods may exist in one film laminating machine to cooperatively correct the position of the palletized article on the roller table 121, for convenience of description hereinafter, the push rods are classified into a push rod A1221 and a push rod B1222. The bearing assembly 120 may consist of the variable frequency motor 123, a worm gear reducer 502, a bracket A503, a transmission sprocket assembly A504, a bottom long chain 505, the roller table 121, a transmission sprocket assembly B507, a vertical chain A508, a transmission sprocket assembly C509, the push rod A1221, a horizontal chain A511, a transmission sprocket assembly D512, the palletized article 513, the push rod B1222, a transmission sprocket assembly E515, a horizontal chain B516, a bracket B517, and a vertical chain B. The variable frequency motor 123 is in matched connection with the worm gear reducer 502, wherein, the worm gear reducer 502, the transmission sprocket assembly A504, and the transmission sprocket assembly E515 are fixed on the bracket A503; the transmission sprocket assembly B507, the transmission sprocket assembly C509 and the transmission sprocket assembly D512 are fixed on the bracket B517; the horizontal chain B516 is in matched connection with the transmission sprocket assembly E515 and the worm gear reducer 502 to drive the push rod B1222 to reciprocate; the vertical chain B is in matched connection with the transmission sprocket assembly E515 and the transmission sprocket assembly A504; the bottom long chain 505 is in matched connection with the transmission sprocket assembly A504 and the transmission sprocket assembly B507; the vertical chain A508 is in matched connection with the transmission sprocket assembly B507 and the transmission sprocket assembly D512; the horizontal chain A511 is in matched connection with the transmission sprocket assembly C509 and the transmission sprocket assembly D512 to drive the push rod A1221 to reciprocate; one end of the lifting chain D is fixedly connected to a lifting fixing part 186, and the other end of the lifting chain D is fixedly connected to a lifting fixing part H82; a guide wheel assembly D85 is matched with the guide post A206; one end of a lifting chain C is fixedly connected to a lifting fixing part E68, and the other end of the lifting chain C is fixedly connected to a lifting fixing part F70; a guide wheel assembly C67 is matched with a guide post B209; one end of a lifting chain B is fixedly connected to a lifting fixing part C54, and the other end of the lifting chain B is fixedly connected to a lifting fixing part D55; a guide wheel assembly B56 is matched with a guide post C210; one end of a lifting chain A is fixedly connected to a lifting fixing part A37, and the other end of the lifting chain A is fixedly connected to a lifting fixing part B39. A guide wheel assembly A36 is matched with a guide post D207.

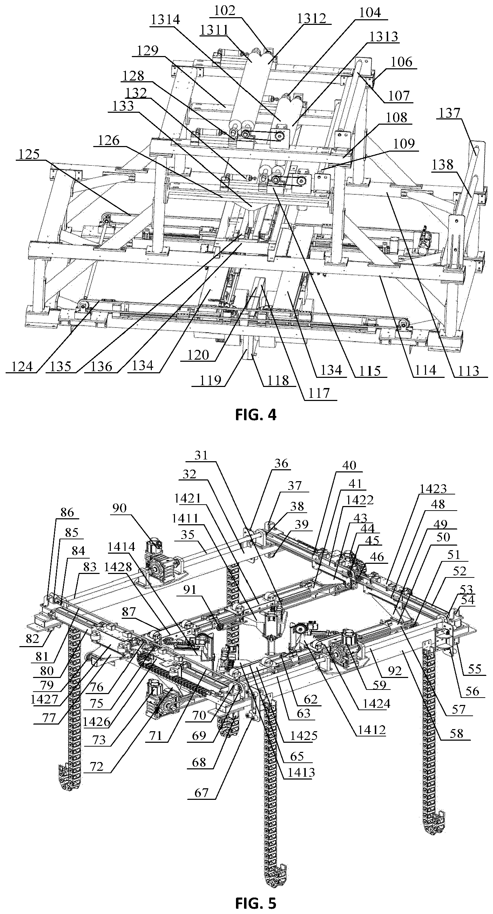

Based on the above embodiments, as shown in FIG. 4, the film transporting device 130 further includes a funnel 133 and a suction assembly 134; the funnel 133 is arranged between the roller sets 131 and the film continuation assemblies 141, and an opening of the funnel 133 faces the roller sets 131; the suction assembly 134 is arranged at a film outlet of the funnel 133.

When in use, considering that the cold-shrinkable film is lighter, position deviation or winding may occur when the roller sets 131 rotate; thus, the funnel 133 may be arranged between the roller sets 131 and the film continuation assemblies 141, and the opening of the funnel 133 faces the roller sets 131; the film outlet of the funnel 133 corresponds to the positions of the film continuation assemblies 141; when the cold-shrinkable film on the roller set 131 is transported into the funnel 133, it can be ensured that the cold-shrinkable film is output from the film outlet of the funnel 133; meanwhile, considering that the two opposite film layers of the cold-shrinkable film are attached to each other, the suction assembly 134 may be arranged at the film outlet of the funnel 133; after the cold-shrinkable film is output from the film outlet of the funnel 133, the suction assembly 134 sucks the two opposite film layers of the cold-shrinkable film to enable the two opposite film layers to be separated.

Further, the suction assembly 134 includes a third motor, a first suction cup set and a second suction cup set; the third motor is electrically connected to the controller; the first suction cup set and the second suction cup set are oppositely arranged and are in transmission connection with the third motor; the third motor is configured to drive the first suction cup set and the second suction cup set to move close to or away from the cold-shrinkable film therebetween, so that the first suction cup set and the second suction cup set suck two opposite film layers of the cold-shrinkable film respectively to enable the two opposite film layers to be separated.

During specific implementation, each of the first suction cup set and the second suction cup set may be provided with one or more suction cups; and each of the suction cups in the first suction cup set is opposite to the corresponding suction cup in the second suction cup set; when the cold-shrinkable film is output from the film outlet of the funnel 133, the third motor drives the first suction cup set and the second suction cup set to move close to or away from the cold-shrinkable film therebetween, so that the first suction cup set and the second suction cup set suck two opposite film layers of the cold-shrinkable film respectively to enable the two opposite film layers to be separated. Of course, other structures capable of drawing or sucking the cold-shrinkable film, such as an air extractor, may also be selected as the suction assembly 134.

Optionally, the film transporting device 130 further includes a static electricity elimination assembly 135 arranged between the film outlet of the funnel 133 and the suction assembly 134.

During specific implementation, considering that static electricity may be attached to the cold-shrinkable film, multiple layers of the cold-shrinkable film may adhere to each other, resulting in failure of the suction and stretching of the cold-shrinkable film; thus, the static electricity elimination assembly 135, such as an ion wind rod or an ion wind machine, may be arranged in a region between the film outlet of the funnel 133 and the suction assembly 134; before the cold-shrinkable film is output from the film outlet of the funnel 133, static electricity on the cold-shrinkable film is removed by the static electricity elimination assembly 135, which is convenient for the suction assembly 134 to subsequently suck and stretch the cold-shrinkable film.

Based on the above embodiments, the film transporting device 130 further includes a heat-sealing assembly 136, the heat-sealing assembly 136 including a serrated knife, a knife groove, a first heat-sealing rod, a second heat-sealing rod and an air cylinder; the serrated knife and the air cylinder are both fixedly arranged between the static electricity elimination assembly 135 and the suction assembly 134; the first heat-sealing rod and the second heat-sealing rod are oppositely arranged below the serrated knife; the serrated knife is fixedly connected to a drive shaft of the air cylinder; the first heat-sealing rod and the second heat-sealing rod are relatively close to each other to clamp and heat the cold-shrinkable film; after the first heat-sealing rod and the second heat-sealing rod cooperatively perform heating and heat seal on the cold-shrinkable film, the air cylinder drives the serrated knife to move close to or away from the knife groove, such that the serrated knife cooperates with the knife groove to cut the cold-shrinkable film.

When in use, considering that the serrated knife and the knife groove are both movably arranged, there may be a problem of a poor heat-sealing cutting effect or cutting failure. Thus, both the serrated knife and the air cylinder may be fixedly arranged above the suction assembly 134, and the first heat-sealing rod and the second heat-sealing rod are oppositely arranged between the serrated knife and the suction assembly 134; the serrated knife is fixedly connected to the drive shaft of the air cylinder; the first heat-sealing rod and the second heat-sealing rod cooperate with each other, so that the first heat-sealing rod and the second heat-sealing rod clamp the cold-shrinkable film; after heat seal of the cold-shrinkable film, the air cylinder can drive the serrated knife to move close to or away from the knife groove, such that the serrated knife cooperates with the knife groove to cut the cold-shrinkable film, thereby improving the stability during heat-sealing cutting.

In a specific implementation, it should be noted that a plurality of roller sets 131 may exist in one film laminating machine to transport cold-shrinkable films of different specifications; for convenience of description hereinafter, the roller sets 131 may be classified into a driven rubber-covered roller set A1311, a driving rubber-covered roller set A1312, a driving rubber-covered roller set B1313 and a driven rubber-covered roller set B1314. The film transporting device 130 may consist of the driven rubber-coated roller set A1311, a roller set support assembly A102, the driving rubber-covered roller set A1312, a roller set support assembly B104, the driving rubber-covered roller set B1313, a first-layer support profile A106, a support roller A107, a first-layer support profile B108, a support roller B109, a support roller C137, a support roller D138, the second motor 132, a long support profile A113, a long support profile B114, a roller set support assembly C115, the suction assembly 134, a suction cup A117, a suction cup B118, a suction cup C119, a suction cup D120, the heat-sealing assembly 136, the static electricity elimination assembly 135, a dragging chain A124, a dragging chain B125, a second-layer support profile A126, the funnel 133, a roller set support assembly D128, a second-layer support profile B129 and the driven rubber-coated roller set B1314.

The roller set support assembly A102 is mounted on the first-layer support profile A106; the roller set support assembly D128 is mounted on the first-layer support profile B108; the driven rubber-covered roller set A1311 and the driving rubber-covered roller set A1312 are matched together with the roller set support assembly A102; the roller set support assembly B104 is mounted on the first-layer support profile A106; the roller set support assembly C115 is mounted on the second-layer support profile A126; the driving rubber-coated roller set B1313 and the driven rubber-coated roller set B1314 are matched together with the roller set support assembly B104; two ends of the suction assembly 134 and the suction assembly 134 are fixedly connected to the dragging chain A124 and the dragging chain B125, respectively; the suction cup A117 and the suction cup B118 are mounted on the suction assembly 134; the suction cup C119 and the suction cup D120 are mounted on the suction assembly 134; two ends of the heat-sealing assembly 136 are fixed onto the long support profile A113 and the long support profile B114, respectively; the static electricity elimination assembly 135 is fixed onto the heat-sealing assembly 136; two ends of the funnel 133 are fixed to the second-layer support profile A126 and the second-layer supporting profile B129, respectively.

Based on the above embodiments, as shown in FIG. 5, the film stretching device 140 further includes a plurality of sliders 142 and a second frame body; each of the sliders 142 is connected to one of the film continuation assemblies 141; a roller is arranged on a surface of each slider 142 that is in contact with the second frame body, and is clamped onto the second frame body; the sliders 142 horizontally move along a sliding chute on the second frame body by means of the roller.

Optionally, the roller is a V-shaped wheel; a bearing pulley is arranged on each of two sides of the V-shaped wheel, and is arranged on a surface of each slider 142 that is in contact with the second frame body; the sliders 142 move along the second frame body by means of the bearing pulleys.

During specific implementation, considering that stretching directions of the different film continuation assemblies 141 are different, a plurality of sliders 142 may be arranged on the second frame body; the second frame body may consist of a plurality of cross beams and a plurality of longitudinal beams, and the plurality of sliders 142 are arranged on the cross beams and the longitudinal beams, respectively, so that the cold-shrinkable film can be stretched by the plurality of film continuation assemblies 141 to have a size conforming to the size of the palletized article. Meanwhile, considering that the sliders 142 need to slide on the second frame body, the V-shaped wheel may be selected as the roller to reduce a friction force during sliding and facilitate assembling and disassembling. Meanwhile, considering that the V-shaped wheel is prone to friction damage when the V-shaped wheel rolls on the second frame body, one bearing pulley may be arranged on each of two sides of the V-shaped wheel, and is arranged on a surface of each slider 142 that is in contact with the second frame body; the sliders 142 move along the second frame body by means of the bearing pulleys. The V-shaped wheel is supported by the bearing pulleys to cooperate with the sliding of the sliders 142 on the second frame body, thereby prolonging the service life of the machine.

In a specific implementation, it should be noted that a plurality of film continuation assemblies 141 and a plurality of sliders 142 may exist in one film laminating machine to stretch the cold-shrinkable film in different directions respectively; for convenience of description hereinafter, the film continuation assemblies 141 include a film continuation assembly A1411, a film continuation assembly B1412, a film continuation assembly C1413 and a film continuation assembly D1414. The sliders 142 include a hand-held slider A1421, a hand-held slider B1422, a hand-held slider C1423, a hand-held slider D1424, a hand-held slider E1425, a hand-held slider F1426, a hand-held slider G1427 and a hand-held slider H1428. The film stretching device 140 may consist of a driving chain A31, a cross beam A32, the hand-held slider A1421, the film continuation assembly A1411, a driving shaft A35, a guide wheel assembly A36, a lifting fixing part A37, a driving sprocket A38, a lifting fixing part B39, a driving chain A40, a cross beam B41, the hand-held slider B1422, a cross beam lifting part A43, a drive assembly A44, an idler assembly A45, an idler assembly B46, the hand-held slider C1423, a driving chain B48, a cross beam lifting part B49, a cross beam C50, an idler assembly C51, a longitudinal beam A52, a driving sprocket B53, a lifting fixing part C54, a lifting fixing part D55, a guide wheel assembly B56, a driving chain C57, a cross beam D58, a drive assembly B59, the hand-held slider D1424, the film continuation assembly B1412, an idler assembly D62, a driving shaft B63, the hand-held slider E1425, a driving chain D65, the film continuation assembly C1413, a guide wheel assembly C67, a lifting fixing part E68, a driving sprocket C69, a lifting fixing part F70, a driving chain E71, a cross beam lifting part C72, a drive assembly C73, the hand-held slider F1426, an idler assembly E75, an idler assembly F76, a cross beam lifting part D77, the hand-held slider G1427, an idler assembly G79, a longitudinal beam B80, a driving chain F81, a lifting fixing part H82, a driving shaft C83, a driving sprocket C84, a guide wheel assembly D85, a lifting fixing part 186, a driving chain G87, the hand-held slider H1428, the film continuation assembly D1414, a drive assembly D90, an idler assembly H91 and a driving shaft D92.

The guide wheel assembly A36, the lifting fixing part B39, the lifting fixing part H82, the guide wheel assembly D85 and the drive assembly D90 are mounted on the cross beam A32; one end of the driving shaft A35 is in matched connection with the drive assembly D90, and the other end of the driving shaft A35 is in matched connection with the driving sprocket A38; one end of the driving shaft C83 is in matched connection with the drive assembly D90, and the other end of the driving shaft C83 is in matched connected with the driving sprocket C84; the lifting fixing part A37, the idler assembly A45, the idler assembly B46 and the lifting fixing part C54 are mounted on the longitudinal beam A52; the hand-held slider B1422 and the hand-held slider C1423 are matched with the longitudinal beam A52; one end surface of the cross beam lifting part A43 is fixedly connected to the hand-held slider B1422, and the other end surface of the cross beam lifting part A43 is fixedly connected to the cross beam B41; one end surface of the cross beam lifting part B49 is fixedly connected to the hand-held slider C1423, and the other end surface of the cross beam lifting part B49 is fixedly connected to the cross beam C50; the driving chain A40 is matched with the driving sprocket A38 and the idler assembly A45 to drive the hand-held slider B1422 to reciprocate on the longitudinal beam A52; the drive assembly A44, the idler assembly G79 and the idler assembly H91 are mounted on the cross beam B41; the drive assembly B59, the lifting fixing part D55, the guide wheel assembly B56, the guide wheel assembly C67 and the lifting fixing part E68 are mounted on the cross beam D58; one end of the driving shaft D92 is in matched connection with the drive assembly B59, and the other end of the driving shaft D92 is in matched connection with the driving sprocket B53; the driving chain B48 is matched with the idler assembly B46 and the driving sprocket B53 to drive the hand-held slider C1423 to reciprocate on the longitudinal beam A52; the hand-held slider D1424 and the hand-held slider E1425 are mounted on the cross beam C50 in a matched manner; the idler assembly C51, the idler assembly D62 and the drive assembly C73 are fixed to the cross beam C50; one end of the driving shaft B63 is in matched connection with the drive assembly B59, and the other end of the driving shaft B63 is in matched connection with the driving sprocket C69; the driving chain C57 is in matched connection with the idler assembly C51 and the drive assembly C73; the film continuation assembly B1412 is mounted on the hand-held slider D1424. The film continuation assembly C1413 is mounted on the hand-held slider E1425; the driving chain D65 is in matched connection with the idler assembly D62 and the drive assembly C73; the driving sprocket C69, the lifting fixing part F70, the idler assembly E75, the idler assembly F76 and the lifting fixing part 186 are mounted on the longitudinal beam B80; the driving chain E71 is in matched connection with the driving sprocket C69 and the idler assembly E75 to drive the hand-held slider F1426 to reciprocate on the longitudinal beam B80; one end of the beam lifting part C72 is fixed to the longitudinal beam B80, and the other end of the beam lifting part C72 is fixed to the cross beam C50; one end of the cross beam lifting part D77 is fixed to the longitudinal beam B80, and the other end of the cross beam lifting part D77 is fixedly connected to the cross beam B41; one end of the driving shaft C83 is in matched connection with the drive assembly D90, and the other end of the driving shaft C83 is in matched connection with the driving sprocket C84; the driving chain F81 is matched with the driving sprocket C84 and the idler assembly F76 to drive the hand-held slider G1427 to reciprocate on the longitudinal beam B80; the driving chain G87 is matched with the drive assembly A44 and the idler assembly G79 to drive the film continuation assembly D1414 to reciprocate on the cross beam B41; the driving chain A31 is matched with the drive assembly A44 and the idler assembly H91 to drive the hand-held slider A1421 to reciprocate on the cross beam B41; the film continuation assembly A1411 is mounted on the hand-held slider A1421; the film continuation assembly D1414 is mounted on the hand-held slider H1428; the film continuation assemblies A1411, B1412, C1413 and D1414 have the same structure; the idler assemblies A45, B46, C51, D62, E75, F76, G79 and H91 have the same structure.

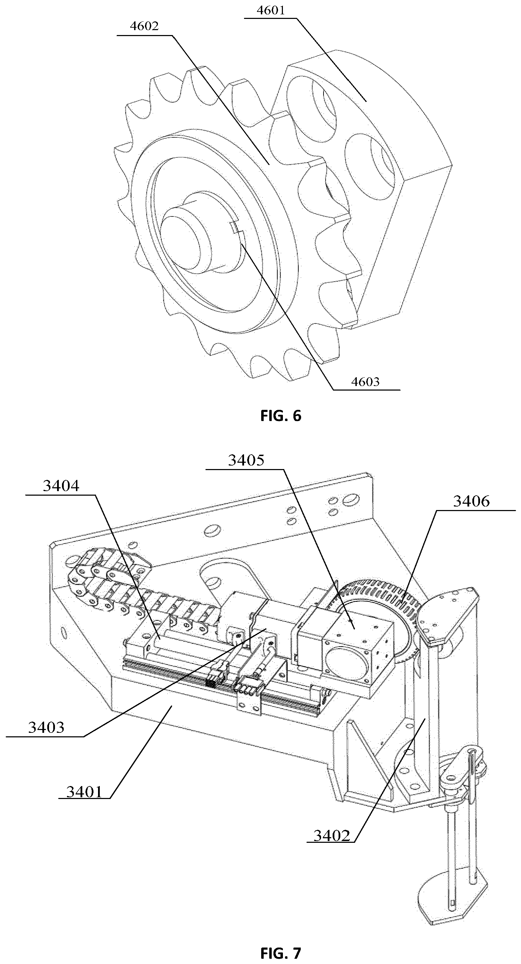

As shown in FIG. 6, the idler assembly B consists of an idler shaft 4601, an idler 4602, and a clamp spring 4603; the idler 4602 and the idler shaft 4601 are mounted in a matched manner, and the clamp spring 4603 tightly clamps the idler 4602.

Based on the above embodiments, the film continuation assembly 141 includes pulling claws and a fourth motor; the pulling claws are fixedly arranged on the corresponding slider 142; a drive shaft of the fourth motor is in transmission connection with the slider 142; the fourth motor is configured to drive the slider 142 to move along the third frame body after the pulling claws clamp the cold-shrinkable film.

During specific implementation, the pulling claws clamp the cold-shrinkable film. The fourth motor drives the slider 142 to move along the third frame body, so that the plurality of pulling claws can cooperatively stretch the cold-shrinkable film to have a size corresponding to the palletized article.

As shown in FIG. 7, in a specific implementation, each film continuation assembly 141 may consist of a pulling claw fixing part 3401, pulling claws 3402, a small drive motor 3403, a rodless cylinder 3404, a small reducer 3405, and a rubber-covered drive wheel 3406; the pulling claws 3402 and the rodless cylinder 3404 are fixed onto the pulling claw fixing part 3401; the small reducer 3405 is mounted on the rodless cylinder 3404; the small drive motor 3403 is in matched connection with the small reducer 3405; the rubber-covered drive wheel 3406 is fixedly connected to the small reducer 3405.

The film laminating machine provided by the above embodiments of the present disclosure is suitable for automated assembly line operations.; the bearing assembly is configured to bear a palletized article to be laminated with a film, the detector is configured to detect a specification of the palletized article, and the controller selects a matching roller set in the film transporting device based on the specification of the palletized article detected by the detector, controls the film stretching device to stretch the cold-shrinkable film output from the roller set, and enable the cold-shrinkable film to cover the palletized article, so that the processing efficiency and the adaptability of the film laminating machine are improved.

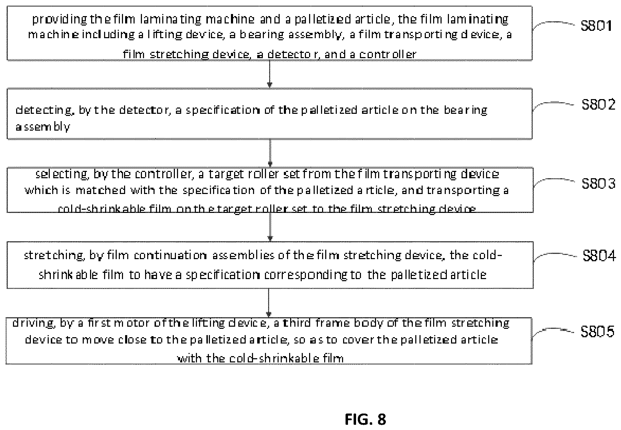

In addition, as shown in FIG. 8, the embodiments of the present disclosure further provide a method for using a film laminating machine; the method includes the following steps:
In S801, the film laminating machine and a palletized article are provided, wherein the film laminating machine includes a lifting device, a bearing assembly, a film transporting device, a film stretching device, a detector, and a controller;
In S802, a specification of the palletized article on the bearing assembly is detected by the detector;
For example, when the palletized article is transported from a roller table of the bearing assembly to a detection region of the detector, the detector gauges that the specification of the palletized article is 1m^{∗}0.8m, and sends the specification information of the palletized article to the controller for subsequent processing;
In S803, a matching target roller set is selected by the controller from the film transporting device based on the specification of the palletized article, and a cold-shrinkable film on the target roller set is transported to the film stretching device;
During specific implementation, specifications of the palletized articles may be preset to correspond to different cold-shrinkable films within a preset range; the controller selects the matching target roller set based on the specification of the palletized article. If the controller receives the specification of the palletized article detected by the detector being 1m^{∗}0.8m or 0.9m*0.7m, a roller set mounted with a cold-shrinkable film of 0.5m*0.4m is selected as the target roller set. If the controller receives the specification of the palletized article detected by the detector being 1m^{∗}0.3m or 0.8m*0.1m, a roller set mounted with a cold-shrinkable film of 0.5m*0.15m is selected as the target roller set, and the cold-shrinkable film on the target roller set is transported to the film stretching device.

In S804, the cold-shrinkable film is stretched by film continuation assemblies of the film stretching device to have a specification corresponding to the palletized article.

The film stretching device may include the plurality of film continuation assemblies which can clamp the cold-shrinkable film and simultaneously stretch the cold-shrinkable film in different directions, so that the cold-shrinkable film is stretched to have a size corresponding to the palletized article. For example, if the specification of the palletized article is 1m^{∗}0.8m, the film continuation assemblies are controlled to stretch the cold-shrinkable film to have a size of 1m^{∗}0.8m or 1.1m*0.9m to ensure that the cold-shrinkable film can cover the palletized article.

In S805, a third frame body of the film stretching device is driven by a first motor of the lifting device to move close to the palletized article, so as to cover the palletized article with the cold-shrinkable film.

After the film continuation assemblies stretch the cold-shrinkable film to have the size corresponding to the palletized article, the first motor of the lifting device drives the third frame body of the film stretching device to move close to the palletized article, so as to cover the palletized article with the cold-shrinkable film. Of course, the first motor may also drive the third frame body of the film stretching device to move close to the palletized article, and then, the cold-shrinkable film is stretched.

In the method for using the film laminating machine provided by the above embodiment of the present disclosure, the matching cold-shrinkable film is selected based on the detected palletized articles of different specifications to perform lamination and coverage, so that the efficiency and the adaptability of the film lamination are improved.

In summary, according the film laminating machine and the method for using the same provided by the above embodiments of the present disclosure, the cold-shrinkable film of the corresponding specification is selected based on the specification of the palletized article detected by the detector, and is stretched by the film continuation assemblies to cover the palletized article, so that the processing efficiency and the adaptability of the film laminating machine are improved.

The foregoing descriptions merely refer to the specific embodiments of the present disclosure, but the protection scope of the present disclosure is not limited thereto. Variations or modifications that can be made easily by those skilled in the art should fall within the protection scope of the present disclosure. Therefore, the protection scope of the present disclosure shall be subject to the protection scope of the claims.

## Claims

1. A film laminating machine (100), comprising:
a lifting device (110), the lifting device (110) comprising a first motor (111) and a first frame body (112), the first motor (111) being arranged on the first frame body (112);
a bearing assembly (120), the bearing assembly (120) comprising a roller table (121), the roller table (121) being arranged at a middle position below the first frame body (112), a palletized article being arranged on the roller table (121);
a film transporting device (130), the film transporting device (130) comprising a second motor (132) and at least two roller sets (131), the second motor (132) and the roller sets (131) both being arranged on the first frame body (112), all the roller sets (131) being of different heights and being respectively in transmission connection with a drive shaft of the second motor (132), different roller sets (131) being mounted with cold-shrinkable films of different specifications;
a film stretching device (140), the film stretching device (140) comprising a plurality of film continuation assemblies, a plurality of film continuation assemblies being respectively arranged below the roller sets (131), each film continuation assembly (141) being configured to clamp and stretch the cold-shrinkable film in a preset direction, and the stretching directions of the different film continuation assemblies (141) being different;
a detector, the detector being arranged on the first frame body (112), the detector being configured to detect a specification of the palletized article on the roller table (121);
a controller, the controller being electrically connected to the first motor (111), the second motor (132) and a control terminal of the detector, the controller being configured to select a matching target roller set (131) based on the specification of the palletized article detected by the detector, to control the second motor (132) to drive the target roller set (131) to rotate such that the cold-shrinkable film on the target roller set (131) is transported to the film continuation assemblies-(141), to control the film continuation assemblies (141) to stretch the cold-shrinkable film transported from the target roller set (131) to have a size matched with the palletized article, and to drive all the film continuation assemblies (141) by means of the first motor (111) to clamp the cold-shrinkable film to cover the palletized article.

2. The film laminating machine (100) according to claim 1, wherein the bearing assembly (120) further comprises two push rods (122) and a variable frequency motor (123), the two push rods (122) being oppositely arranged on both sides of the roller table (121), a drive shaft of the variable frequency motor (123) being in transmission connection with the two push rods (122), the variable frequency motor (123) being configured to drive the two push rods (122) to move relatively close to or away from each other, such that the two push rods (122) push the palletized article transported onto the roller table (121) to a middle position of the roller table (121).

3. The film laminating machine (100) according to claim 1, wherein the film transporting device (130) further comprises a funnel (133) and a suction assembly (134), the funnel (133) being arranged between the roller sets (131) and the film continuation assemblies (141), an opening of the funnel (133) facing the roller sets (131), the suction assembly (134) being arranged at a film outlet of the funnel (133).

4. The film laminating machine (100) according to claim 3, wherein the suction assembly (134) comprises a third motor, a first suction cup set and a second suction cup set; the third motor being electrically connected to the controller; the first suction cup set and the second suction cup set are oppositely arranged and are in transmission connection with the third motor; and the third motor is configured to drive the first suction cup set and the second suction cup set to move close to or away from the cold-shrinkable film therebetween, so that the first suction cup set and the second suction cup set suck two opposite film layers of the cold-shrinkable film respectively to enable the two opposite film layers to be separated.

5. The film laminating machine (100) according to claim 3, wherein the film transporting device (130) further comprises a static electricity elimination assembly (135) arranged between the film outlet of the funnel (133) and the suction assembly (134).

6. The film laminating machine (100) according to claim 5, wherein the film transporting device (130) further comprises a heat-sealing assembly (136), the heat-sealing assembly (136) comprising a serrated knife, a knife groove, a first heat-sealing rod, a second heat-sealing rod and an air cylinder; the serrated knife and the air cylinder being both fixedly arranged between the static electricity elimination assembly (135) and the suction assembly (134); the first heat-sealing rod and the second heat-sealing rod being oppositely arranged below the serrated knife; the serrated knife being in transmission connection with a drive shaft of the air cylinder; after the first heat-sealing rod and the second heat-sealing rod cooperatively perform heat seal on the cold-shrinkable film, the air cylinder driving the serrated knife to move close to or away from the knife groove, such that the serrated knife cooperates with the knife groove to cut the cold-shrinkable film.

7. The film laminating machine (100) according to claim 1, wherein the film stretching device (140) further comprises a plurality of sliders (142) and a second frame body; each of the sliders (142) being connected to one film continuation assembly (141); a roller being arranged on a surface of each slider (142) that is in contact with the second frame body, and being clamped onto the second frame body; the sliders (142) horizontally moving along a sliding chute on the second frame body by means of the roller.

8. The film laminating machine (100) according to claim 7, wherein the roller is a V-shaped wheel; a bearing pulley being arranged on each of two sides of the V-shaped wheel, and being arranged on a surface of each slider (142) that is in contact with the second frame body; the sliders (142) moving along the second frame body by means of the bearing pulleys.

9. The film laminating machine (100) according to claim 8, wherein each film continuation assembly (141) comprises pulling claws and a fourth motor; the pulling claws being fixedly arranged on the corresponding slider (142); a drive shaft of the fourth motor being in transmission connection with the slider (142); and the fourth motor being configured to drive the slider (142) to move along a third frame body after the pulling claws clamp the cold-shrinkable film.

10. A method for using a film laminating machine (100), wherein the method is applied to the film laminating machine (100) according to any one of claims 1 to 9; and the method comprises:
providing the film laminating machine (100) and a palletized article, the film laminating machine (100) comprising a lifting device (110), a bearing assembly (120), a film transporting device (130), a film stretching device (140), a detector, and a controller;
detecting, by the detector, a specification of the palletized article on the bearing assembly (120);
selecting, by the controller, a matching target roller set (131) from the film transporting device (130) based on the specification of the palletized article, and transporting a cold-shrinkable film on the target roller set (131) to the film stretching device (140);
stretching, by film continuation assemblies (141) of the film stretching device (140), the cold-shrinkable film to have a specification corresponding to the palletized article; and
driving, by a first motor (111) of the lifting device (110), a third frame body of the film stretching device (140) to move close to the palletized article, so as to cover the palletized article with the cold-shrinkable film.
